# FASCICULE DE BREVET EUROPEEN

(11) **EP 1 616 615 B1**
(45) Date de publication et mention de la délivrance du brevet: **17.08.2016**
(21) Numéro de dépôt: 05356096.7
(22) Date de dépôt: 03.06.2005
(51) Int. Cl.: B01D 53/86, B01D 53/14

(54) **Procédé d'épuration de fumées comprenant une oxydation catalytique du monoxyde de carbone, et installation correspondante**
Verfahren zur Reinigung von Rauchgasen durch eine katalytische Oxidation von Kohlenmonoxid sowie entsprechende Anlage
Process for cleaning flue gas comprising a catalytic oxidation of carbon monoxide and corresponding installation

(30) Priorité: 04.06.2004 FR 0406070
(43) Date de publication de la demande: 18.01.2006
(73) Titulaire: LAB SA, 69007 Lyon (FR)
(72) Inventeur: Siret, Bernard, 69008 Lyon (FR)
(74) Mandataire: Lavoix

(56) Documents cités:
- DE-A1- 3 304 484
- US-A- 5 451 558

## Description

La présente invention concerne un procédé d'épuration de fumées comprenant une oxydation catalytique du monoxyde de carbone, ainsi qu'une installation pour la mise en oeuvre de ce procédé. US-A-5 451 558, qui peut être considéré comme l'état de la technique le plus proche de l'invention, en fournit des exemples.

Lors d'incinération de déchets ménagers ou de boues de station d'épuration, par exemple, les fumées issues de la combustion contiennent une quantité appréciable d'éléments nocifs comme le chlorure d'hydrogène HCl, le dioxyde de soufre SO₂, des poussières, ainsi que des métaux lourds et des composés organiques, tels que les furanes. Ces fumées contiennent également des oxydes d'azote, et du monoxyde de carbone CO. Avant de pouvoir être rejetées à l'atmosphère, ces fumées résultant de la combustion doivent être épurées.

Il est usuel de procéder à une réduction des polluants acides et des particules par des procédés secs, semi-secs ou humides. Il est usuel de procéder à la réduction des oxydes d'azote par voie catalytique ou non catalytique.

Cependant, la qualité de la combustion ne suffit pas toujours à obtenir une teneur résiduelle dans les fumées avant épuration qui soit satisfaisante du point de vue du monoxyde de carbone, ou bien des composés organiques volatils. Dans le cas des composés organiques volatils, il existe plusieurs solutions, parmi lesquelles la combustion régénérative, dite RTO en langue anglaise, ou l'adsorption sur du charbon actif.

En revanche, en ce qui concerne le monoxyde de carbone, sauf à tenter une oxydation avec des composés comme l'ozone, fort coûteux à générer, le seul choix économiquement viable réside dans l'utilisation d'un catalyseur d'oxydation du CO à base de métaux précieux. Un tel catalyseur peut assurer l'oxydation du CO seul en CO₂, ou bien du CO et des organiques.

Malheureusement, un tel catalyseur est assez sensible à un empoissonnement et peut perdre rapidement son activité, particulièrement s'il est exploité à basse température, par exemple vers 250°C. Dans certains cas la durée de vie utile du catalyseur peut être aussi courte que quelques jours, ce qui est économiquement inacceptable.

Quand le catalyseur a perdu son activité, on peut effectuer une régénération thermique en élevant la température du réacteur bien au-dessus de sa température nominale de fonctionnement, ce qui a pour effet de désorber ou de détruire les poisons. Ceci oblige cependant à une interruption dans l'utilisation du catalyseur, à des fins d'épuration.

Dans ces conditions, l'invention vise à proposer un procédé d'épuration des fumées, faisant appel à une étape d'oxydation catalytique du monoxyde de carbone, qui assure une protection efficace du catalyseur correspondant à l'égard de l'empoisonnement.

L'invention vise également à proposer un tel procédé qui soit économiquement avantageux, en particulier en autorisant une mise en oeuvre de l'étape d'oxydation du monoxyde de carbone à une température relativement basse.

A cet effet, elle a pour objet un procédé d'épuration de fumées, tel que défini à la revendication 1.

D'autres caractéristiques du procédé selon l'invention sont spécifiées aux revendications 2 à 5.

L'invention a également pour objet une installation d'épuration des fumées, telle que définie à la revendication 6.

Une caractéristique avantageuse de l'installation selon l'invention est définie à la revendication 7.

L'invention va être décrite ci-après, en référence à la figure annexée unique, donnée uniquement à titre d'exemple non limitatif, qui est un schéma synoptique d'un procédé d'épuration de fumées conforme à l'ïnvention.

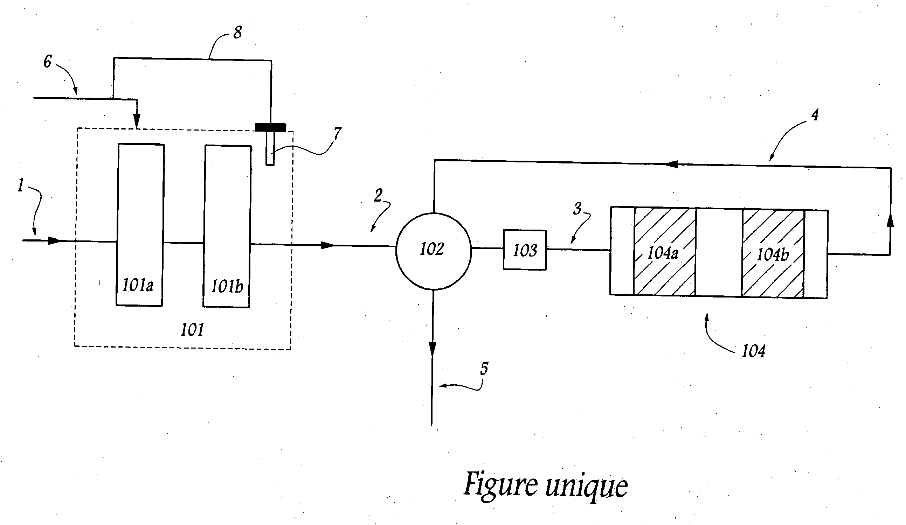

Les fumées 1, qui sont issues d'un gaz de combustion et sont préalablement refroidies, sont alimentées à un ensemble de lavage humide 101. Dans l'exemple de la figure 1 deux laveurs constituent cet ensemble, à savoir un laveur acide 101a associé à une trempe, ainsi qu'un laveur alcalin 101b. Cependant, l'agencement de l'ensemble de lavage humide peut être tout autre et comporter par exemple un nombre quelconque de laveurs, ainsi qu'une trempe séparée ou non.

Des réactifs de neutralisation, non représentés, sont introduits dans le ou les laveurs, ainsi que de l'eau d'appoint si nécessaire. Un réactif d'oxydation 6 est introduit dans l'ensemble des laveurs 101, par exemple au niveau du laveur d'acide 101a. Il est à noter que ce réactif d'oxydation pourrait tout aussi bien être admis au niveau du laveur alcalin 101b.

Ce réactif d'oxydation est avantageusement choisi parmi la famille des chlorites ou des hypochlorites. A titre de variante, il peut s'agir du chlore. Ce réactif d'oxydation a pour but d'oxyder les poisons potentiels du catalyseur. Dans ces conditions ces poisons, qui sont notamment les composés soufrés, tels que les sulfures, les oxysulfures ou les thiols, se trouvent transformés, sous l'effet de cette oxydation, en des espèces inoffensives pour les catalyseurs.

La quantité de réactif d'oxydation ainsi introduite est notablement substoechiométrique par rapport à l'ensemble des composés réducteurs présents dans les fumées. En pratique, on mesure la quantité de dioxyde de soufre présente dans les fumées à épurer, et on assimile la quantité de composés réducteurs à cette quantité mesurée de dioxyde de soufre, puisque ce dernier est le composé réducteur largement majoritaire.

Cette mesure est avantageuse, puisque l'utilisation d'une quantité de réactif d'oxydation inférieure à la stoechiométrie limite la consommation de ce réactif. Elle permet également de s'affranchir de la présence d'une quantité appréciable de ce réactif d'oxydation dans les purges des laveurs, ce qui serait préjudiciable au bon fonctionnement du traitement d'eau.

En ce qui concerne la quantité minimale de réactif d'oxydation à introduire dans l'ensemble de lavage, il est à noter que, de façon générale, la quantité de poisons du catalyseur est extrêmement faible et, en tout état de cause, très largement inférieure à la quantité de dioxyde de soufre.

Dans ces conditions, il est clair pour l'homme du métier que l'injection d'un réactif d'oxydation, en une quantité nettement supérieure à celle des poisons, mais néanmoins inférieure à celle du dioxyde de soufre, assure une oxydation sensiblement totale des poisons potentiels du catalyseur. En pratique, on injecte une quantité de réactif d'oxydation comprise entre 5% et 40% de la quantité dite stoechiométrique, correspondant à une réaction complète avec le dioxyde de soufre.

De manière optionnelle, il est possible d'asservir l'injection du réactif d'oxydation 6 à une mesure du potentiel d'oxydoréduction, prise en un point quelconque de l'ensemble de lavage humide 101. Sur la figure 1, on a ainsi représenté une sonde 7, permettant de réaliser une telle mesure, qui est reliée à l'arrivée d'oxydant 6 par l'intermédiaire d'une ligne de commande 8.

Les fumées lavées et oxydées 2 sont alors réchauffées jusqu'à la température où opère le réacteur catalytique 104, par des moyens connus en tant que tels. Dans l'exemple de la figure 1 on a utilisé un échangeur de type « process-process » 102 et un brûleur d'appoint 103, qui élèvent la température jusqu'à une valeur comprise entre 200 et 400°C.

Les fumées réchauffées 3 sont alors admises dans un réacteur catalytique 104 comprenant au moins un étage 104b d'un catalyseur à base de métaux précieux, contenant par exemple du platine, qui est destiné à assurer l'oxydation du monoxyde de carbone. De manière optionnelle cet étage de catalyseur peut être précédé ou suivi d'un étage, ici affecté de la référence 104a, visant à effectuer la destruction des oxydes d'azote par une technologie dite SCR, connue en soi.

Comme on l'a vu précédemment, l'injection du réactif d'oxydation 6 dans l'ensemble de lavage humide 101 a conduit à une oxydation sensiblement complète des poisons potentiels du catalyseur à base de métaux précieux, garnissant l'étage 104b d'oxydation du monoxyde de carbone. Dans ces conditions, la durée de vie de ce catalyseur d'oxydation s'en trouve notablement augmentée. Par ailleurs, grâce à l'oxydation de la majorité des poisons potentiels, il devient possible d'opérer cette oxydation catalytique, au niveau de l'étage 104b, à une température relativement basse, ce qui est avantageux en termes économiques.

Les fumées épurées, issues du réacteur catalytique 104, sont alors évacuées vers une cheminée non représentée, après être repassées par l'échangeur 102.

### EXEMPLE

Un exemple de mise en oeuvre du procédé d'épuration de fumées conforme à l'invention va être décrit dans ce qui suit.

Un flux de fumées à épurer, possédant un débit de 20 000 Nm³/h, contient en particulier les polluants suivants : dioxyde de soufre SO₂, présents à raison de 50 mg/Nm³, ainsi que des composés soufrés du type thiols ou COS, susceptibles d'empoisonner le catalyseur de l'étage 104b, présents dans leur ensemble à moins de 3 mg/Nm³. Les fumées contiennent aussi du CO, à raison de 40 mg/Nm³, ainsi que d'autres polluants comme l'acide chlorhydrique, des poussières et des oxydes d'azote.

L'installation d'épuration des fumées comprend une trempe, un laveur acide opérant vers pH2, un laveur neutre opérant vers pH6, un échangeur récupérateur de chaleur, et un second brûleur à gaz. Il est également prévu un réacteur catalytique comprenant, d'une part, une couche de catalyseur de type SCR, à base d'oxyde de tungstène et de vanadium, dont le but est de réduire les oxydes d'azote et, d'autre part, une couche de catalyseur à base de platine, dont le but est d'oxyder le monoxyde de carbone CO.

L'échangeur et le brûleur réchauffent les gaz de la température de lavage, voisine de 61°C, jusqu'à une température de 250°C, à laquelle opère le réacteur catalytique. En sortie de ce réacteur, au moins 75 % du CO initial est détruit. Il est à noter que, en l'absence d'injection d'oxydant, l'activité de ce catalyseur d'oxydation du CO serait réduite à moins de 25 % en quelques jours.

Conformément à l'invention, on injecte une solution de chlorite de sodium à 25 % dans l'eau, au niveau du laveur acide, selon un débit de 1,5 kg par heure. Ceci permet de rester largement au-dessous de la quantité stoechiométrique, correspondant à ce qui serait nécessaire pour oxyder le composé réducteur majoritairement présent, à savoir le dioxyde de soufre SO₂,

En l'occurrence, le flux de SO₂ est de 1 kg par heure, soit environ 16 mole/h de SO₂, alors que le flux d'oxydant correspond à 0,38 kg par heure de NaClO₂ pur, soit 4,1 mole/h.

On notera que la quantité d'oxydant injectée au laveur est, tout d'abord, très suffisante pour pouvoir réagir avec les composés susceptibles d'empoisonner les catalyseurs, dont on vise la destruction. Par ailleurs, cette quantité est très inférieure au pouvoir réducteur global, assurant ainsi qu'aucune fuite de chlore ou de bioxyde de chlore ne peut se produire.

## Revendications

1. Procédé d'épuration de fumées (1) contenant, entre autres, du monoxyde de carbone et du dioxyde de soufre SO₂, dans lequel on épure partiellement ces fumées (1) dans un ensemble de lavage humide (101), puis on oxyde de manière catalytique le monoxyde de carbone présent dans les fumées partiellement épurées (2), circulant en aval de l'ensemble de lavage humide,
**caractérisé en ce qu'**on injecte, dans l'ensemble de lavage humide (101), un réactif d'oxydation (6) propre à oxyder au moins une fraction substantielle de composés soufrés autres que le dioxyde de soufre SO₂, qui sont initialement présents dans les fumées à épurer (1) et qui sont des poisons pour le catalyseur d'oxydation du monoxyde de carbone, en des espèces inoffensives pour ce catalyseur.

2. Procédé d'épuration de fumées selon la revendication 1, **caractérisé en ce qu'**on injecte ce réactif d'oxydation (6) en une quantité inférieure à la quantité stoechiométrique de la réaction entre ce réactif d'oxydation et le dioxyde de soufre SO₂.

3. Procédé d'épuration de fumées selon la revendication 2, **caractérisé en ce qu'**on injecte ce réactif d'oxydation selon une quantité comprise entre 5 et 40 % de la quantité stoechiométrique de la réaction avec le dioxyde de soufre SO₂.

4. Procédé d'épuration de fumées selon l'une quelconque des revendications précédentes, **caractérisé en ce que** le réactif d'oxydation est le chlore, ou encore est choisi parmi la famille des chlorites et des hypochlorites.

5. Procédé d'épuration de fumées selon l'une quelconque des revendications précédentes, **caractérisé en ce qu'**on asservit la quantité de réactif d'oxydation (6) injectée à une mesure de potentiel d'oxydoréduction dans l'ensemble de lavage humide (101).

6. Installation d'épuration des fumées pour la mise en oeuvre du procédé selon l'une quelconque des revendications précédentes, comportant des moyens d'amenée des fumées à épurer (1), un ensemble de lavage humide (101) mis en communication avec ces moyens d'amenée, des moyens d'évacuation des fumées partiellement épurées (2) provenant de l'ensemble de lavage humide, et un réacteur catalytique (104) comprenant au moins un étage (104b) comportant un catalyseur propre à oxyder le monoxyde de carbone, ce réacteur catalytique (104) étant mis en communication avec les moyens d'évacuation des fumées partiellement épurées (2), **caractérisée en ce que** l'ensemble de lavage humide (101) est muni d'une arrivée d'un réactif d'oxydation (6) propre à oxyder au moins une fraction substantielle de composés soufrés autres que le dioxyde de soufre SO₂, qui sont initialement présents dans les fumées à épurer (1) et qui sont des poisons pour le catalyseur d'oxydation du monoxyde de carbone, en des espèces inoffensives pour ce catalyseur.

7. Installation d'épuration des fumées selon la revendication 6, pour la mise en oeuvre du procédé selon la revendication 5, **caractérisée en ce qu'**elle comprend des moyens (7) de mesure du potentiel d'oxydoréduction dans l'ensemble de lavage humide (101), ainsi que des moyens de commande (8), reliant ces moyens de mesure (7) à l'arrivée du réactif d'oxydation (6).

## Patentansprüche

1. Verfahren zu Reinigung von Rauchgasen (1), die unter anderem Kohlenmonoxid und Schwefeldioxid SO₂ enthalten, wobei die Rauchgase (1) in einer Nasswäscheeinrichtung (101) teilgereinigt werden und das in den stromabwärts der Nasswäscheeinrichtung strömenden teilgereinigten Rauchgasen (2) vorliegende Kohlenmonoxid anschließend katalytisch oxidiert wird,
**dadurch gekennzeichnet,**
**dass** in die Nasswäscheeinrichtung (101) ein Oxidationsmittel (6) eingespritzt wird, das geeignet ist, zumindest einen wesentlichen Anteil der Schwefelverbindungen, die kein Schwefeldioxid SO₂ sind, die anfänglich in den zu reinigenden Rauchgasen (1) vorliegen und die für den zur Oxidierung des Kohlenmonoxids bestimmten Katalysator schädlich sind, zu für den Katalysator unschädlichen Verbindungen zu oxidieren.

2. Verfahren zur Reinigung von Rauchgasen nach Anspruch 1,
**dadurch gekennzeichnet,**
**dass** das Oxidationsmittel (6) in einer Menge eingespritzt wird, die geringer ist als die stöchiometrische Menge der Reaktion zwischen dem Oxidationsmittel und dem Schwefeldioxid SO₂.

3. Verfahren zur Reinigung von Rauchgasen nach Anspruch 2,
**dadurch gekennzeichnet,**
**dass** das Oxidationsmittel in einer Menge zwischen 5 und 40 % der stöchiometrischen Menge der Reaktion mit dem Schwefeldioxid SO₂ eingespritzt wird.

4. Verfahren zur Reinigung von Rauchgasen nach einem der vorhergehenden Ansprüche,
**dadurch gekennzeichnet,**
**dass** das Oxidationsmittel Chlor ist oder aus der Familie der Chlorite und der Hypochlorite ausgewählt ist.

5. Verfahren zur Reinigung von Rauchgasen nach einem der vorhergehenden Ansprüche,
**dadurch gekennzeichnet,**
**dass** die eingespritzte Menge des Oxidationsmittels (6) mit einer Messung des Redoxpotentials in der Nasswäscheeinrichtung (101) geregelt wird.

6. Rauchgasreinigungsanlage zur Umsetzung des Verfahrens nach einem der vorhergehenden Ansprüche, welche Zuführeinrichtungen zur Zuführung der zu reinigenden Rauchgase (1), eine mit den Zuführeinrichtungen verbundene Nasswäscheeinrichtung (101), Abführeinrichtungen zur Abführung der von der Nasswäscheeinrichtung kommenden teilgereinigten Rauchgase (2) und einen katalytischen Reaktor (104) aufweist, welcher mindestens eine Stufe (104b) mit einem zur Oxidierung von Kohlenmonoxid geeigneten Katalysator umfasst, wobei der katalytische Reaktor (104) mit den Abführeinrichtungen zur Abführung der teilgereinigten Rauchgase (2) verbunden ist,
**dadurch gekennzeichnet,**
**dass** die Nasswäscheeinrichtung (101) mit einem Einlass für ein Oxidationsmittel (6) versehen ist, das zum Oxidieren zumindest eines wesentlichen Anteils der Schwefelverbindungen, die kein Schwefeldioxid SO₂ sind, die anfänglich in den zu reinigenden Rauchgasen (1) vorliegen und die für den zur Oxidierung des Kohlenmonoxids bestimmten Katalysator schädlich sind, zu für den Katalysator unschädlichen Verbindungen geeignet ist.

7. Rauchgasreinigungsanlage nach Anspruch 6 zur Umsetzung des Verfahrens nach Anspruch 5,
**dadurch gekennzeichnet,**
**dass** die Rauchgasreinigungsanlage Messeinrichtungen (7) zur Messung des Redoxpotentials in der Nasswäscheeinrichtung (101) sowie Steuereinrichtungen (8) umfasst, welche die Messeinrichtungen (7) mit dem Einlass für das Oxidationsmittel (6) verbinden.

## Claims

1. Method of purifying exhaust vapours (1) which comprise, *inter alia,* carbon monoxide and sulfur dioxide SO₂, wherein those exhaust vapours (1) are partially purified in a wet-washing unit (101), and then the carbon monoxide present in the partially purified exhaust vapours (2) flowing downstream of the wet-washing unit is catalytically oxidised,
**characterised in that** there is injected into the wet-washing unit (101) an oxidation reagent (6) capable of oxidising at least a substantial fraction of sulfur compounds other than sulfur dioxide SO₂ which are initially present in the exhaust vapours (1) to be purified and which are poisons for the carbon monoxide oxidation catalyst, to form species which are innocuous for that catalyst.

2. Method of purifying exhaust vapours, according to claim 1, **characterised in that** the oxidation reagent (6) is injected in an amount which is less than the stoichiometric amount of the reaction between that oxidation reagent and the sulfur dioxide SO₂,

3. Method of purifying exhaust vapours, according to claim 2, **characterised in that** the oxidation reagent is injected in an amount of from 5 to 40 % of the stoichiometric amount of the reaction with the sulfur dioxide SO₂,

4. Method of purifying exhaust vapours, according to any one of the preceding claims, **characterised in that** the oxidation reagent is chlorine or is selected from the family of chlorites and hypochlorites,

5. Method of purifying exhaust vapours, according to any one of the preceding claims, **characterised in that** the amount of oxidation reagent (6) injected is controlled in dependence on a measurement of the redox potential in the wet-washing unit (101).

6. Installation for purifying exhaust vapours, for carrying out the method according to any one of the preceding claims, comprising means for supply of the exhaust vapours (1) to be purified, a wet-washing unit (101) in communication with those supply means, means for taking away partially purified exhaust vapours (2) coming from the wet-washing unit, and a catalytic reactor (104) including at least one stage (104b) comprising a catalyst capable of oxidising carbon monoxide, that catalytic reactor (104) being in communication with the means for taking away the partially purified exhaust vapours (2), **characterised in that** the wet-washing unit (101) is provided with an inlet for an oxidation reagent (6) capable of oxidising at least a substantial fraction of sulfur compounds other than sulfur dioxide SO₂ which are initially present in the exhaust vapours (1) to be purified and which are poisons for the carbon monoxide oxidation catalyst, to form species which are innocuous for that catalyst.

7. Installation for purifying exhaust vapours, according to claim 6, for carrying out the method according to claim 5, **characterised in that** it comprises means (7) for measuring the redox potential in the wet-washing unit (101) and also control means (8) connecting those measurement means (7) to the oxidation reagent (6) inlet.
